# EUROPÄISCHE PATENTSCHRIFT

(11) **EP 1 083 722 B1**
(45) Veröffentlichungstag und Bekanntmachung des Hinweises auf die Patenterteilung: **27.07.2005**
(21) Anmeldenummer: 00810028.1
(22) Anmeldetag: 12.01.2000
(51) Int. Cl.: H04L 29/06, H04L 12/22, H04Q 7/32, H04L 29/08, H04L 12/56

(54) **Verfahren und Gateway, die einen End-zu-End gesicherten Zugriff auf WAP-Dienste erlauben**
Method and gateway enabling an end-to-end secured access to WAP-services
Procédé et passerelle permettant un accès bout à bout sécurisé à des services WAP

(30) Priorität: 07.09.1999 US 152356 P
(43) Veröffentlichungstag der Anmeldung: 14.03.2001
(73) Patentinhaber: Swisscom Mobile AG, 3050 Bern (CH)
(72) Erfinder: Huber, Adriano, 6600 Locarno (CH); Loher, Urs, Dr., 3072 Ostermundigen (CH)
(74) Vertreter: P&TS Patents & Technology Surveys SA

(56) Entgegenhaltungen:
- WO-A-99/45684
- LUOTONEN A: "Tunneling SSL Through a WWW Proxy" INTERNET DRAFT , 14. Dezember 1995 (1995-12-14), XP002167506 Internet Engineering Task Force (IETF)
- JORMALAINEN S AND LAINE J: "Security in the WTLS" SEMINAR ON NETWORK SECURITY, [Online] 3. - 30. November 1999, XP002167503 Helsinki Gefunden im Internet: <URL:http://www.tml.hut.fi/Opinnot/Tik-110 .501/1999/papers/wtls/wtls.html> [gefunden am 2001-05-16] -& HELSINKI UNIVERSITY OF TECHNOLOGY: "Seminar Program" SEMINAR ON NETWORK SECURITY, [Online] 2. - 3. November 1999, Seite 03-11- XP002167504 Helsinki Gefunden im Internet: <URL:http://www.tml.hut.fi/Opinnot/Tik-110 .501/1999/seminar.html> [gefunden am 2001-05-16]

## Beschreibung

### Technisches Gebiet

Die vorliegende Erfindung betrifft ein Verfahren gemäss dem unabhängigen Verfahrensanspruch, mit welchem ein Mobilteilnehmer mit einem WAP-tauglichen Endgerät auf einen WAP oder WEB-Server zugreifen kann. Die Erfindung betrifft auch ein WAP-Gateway zur Weiterleitung einer Anfrage eines WAP-tauglichen Endgeräts auf einen WAP- oder WEB-Server gemäss dem unabhängigen Vorrichtungsanspruch.

### Stand der Technik

WAP (Wireless Application Protocol)-Server, welche WAP basierte Dienste zur Verfügung stellen, sind an sich schon bekannt. Insbesondere sind auf WAP-basierte Dienste im Bereich von e-commerce und von finanziellen Instituten erhältlich.

Solche Dienste verlangen eine gesicherte Paketübertragung zwischen den Endbenutzern und dem Server des Dienstanbieters. Die gewöhnliche und vom WAP-Forum empfohlene Lösung verwendet die WTLS-Protokollschicht (Wireless Transport Layer Security); dieses Verfahren kann jedoch nur zum Sichern der Paketübertragung zwischen den Endgeräten und einem (beispielsweise vom Mobilfunknetzbetreiber verwalteten) Gateway verwendet werden. In diesem Gateway wird eine Protokollübersetzung zum Sicherheitsprotokoll SSL 3.1 oder zum TLS 1.0 durchgeführt.

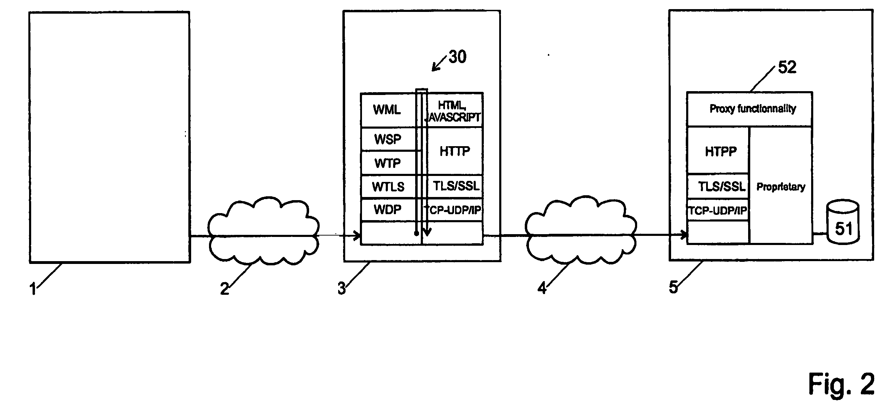

Das Prinzip einer mit diesem Verfahren gesicherten Datenübertragung ist schematisch in der Figur 2 dargestellt. Mit dem Bezugszeichen 1 ist ein WAP taugliches Endgerät, beispielsweise ein WAP-taugliches GSM-Mobilfunktelefon (Global System for Mobile Communication) dargestellt, das sich über ein digitales Mobilfunknetz 2 mit einem vom Betreiber dieses Netzes verwalteten Gateway 3 verbinden kann. Das Endgerät 1 enthält einen Browser. Mit 5 ist ein Server eines Dienstanbieters, beispielsweise eines Finanzinstituts oder eines Anbieters im e-commerce Bereich, dargestellt. Dieser Server 5 kann auf eine Datenbank 51 zugreifen, in welcher WEB und/oder WAP-Seiten gespeichert sind. Die WEB oder WAP-Seiten können beispielsweise HTML-, WML-, JAVA-Script-, WML-Script-, usw., Dokumente enthalten.

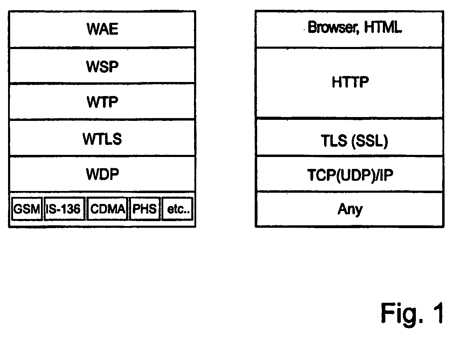

Der Benutzer des Endgeräts 1, der auf eine WEB-oder WAP-Seite in der Datenbank 51 zugreifen kann, muss zu diesem Zweck eine mit WTLS-Diensten gesicherte Anfrage durch das Gateway 3 zum Server 5 senden. Diese Anfrage wird im Gateway 3 durch alle Protokollschichten eines Konvertierungsmoduls 30 entschlüsselt, und dann in eine mit TLS oder SSL gesicherte Anfrage übersetzt (vgl. Fig. 1), die über ein TCP/IP-Netz 4 an den Server 5 gesendet wird. Im Server 5 kann ein anderes Übersetzungsmodul vorgesehen werden, das diese Anfrage in ein eigenes Format konvertiert, welches vom Verwaltungssystem der Datenbank 51 verstanden werden kann. Die Antwort vom Server 5, beispielsweise der Inhalt einer WEB oder WAP-Seite, wird in der anderen Richtung über das Gateway 3, wo es umkonvertiert wird, zum Endgerät 1 geleitet.

Dieses Verfahren erlaubt keine echte End-zu-End-Verschlüsselung; Daten und Pakete müssen im Gateway 3 entschlüsselt und wieder verschlüsselt werden, damit die Protokollübersetzung durchgeführt wird. Für viele Anwendungen ist eine solche Sicherheitslücke jedoch nicht akzeptierbar.

WO 99/45684 offenbart ein Verfahren und eine Vorrichtung, um eine Datenübertragungsverbindung zu eröffnen.

Weiter diskutiert der Artikel "Tunneling SSL through a WWW proxy", Luotonen, et al., Internet Engineering task force, 14.12.1995, XP-002167506, die Möglichkeit, das WWW proxy-Protokoll zu erweitern, so dass auch SSL-Klienten den Proxyserver verwendet können.

### Darstellung der Erfindung

Ein Ziel der vorliegenden Erfindung ist es, ein neues sichereres Datenübertragungsverfahren zwischen einem Endgerät und einem WAP oder WEB-Server, sowie ein WAP-Gateway anzubieten.

Ein anderes Ziel ist es, ein neues Verfahren und ein WAP-Gateway anzubieten, mit welchem eine End-zu-End gesicherte Verbindung zwischen einem WAP-tauglichen Endgerät und einem WAP oder WEB-Server hergestellt werden kann.

Ein weiteres Ziel ist es, ein neues Verfahren anzubieten, welches mit jedem WAP-tauglichen Endgerät das WTLS verwendet, eingesetzt werden kann, insbesondere mit Endgeräten, die eine Serverauthentifizierung basierend auf einem RSA-Schlüssel, auf X.509v3 Zertifikaten, auf RC5 oder auf anderen Sicherheitsprotokollen gemäss WAP oder WTLS, bzw. auf weiteren digitalen Zertifikaten, verwenden.

Gemäss der vorliegenden Erfindung werden diese Ziele insbesondere durch die Merkmale der unabhängigen Ansprüche erreicht. Weitere vorteilhafte Ausführungsformen gehen ausserdem aus den abhängigen Ansprüchen und der Beschreibung hervor.

Insbesondere werden diese Ziele durch ein Verfahren gemäss dem Oberbegriff des Anspruchs 1 dadurch erreicht, dass
- eine Protokollübersetzung zwischen WTLS und SSL und/oder TLS im benannten Server erfolgt, und
- dass keine vollständige WAP-Entschlüsselung im benannten Gateway erfolgt, und
- dass die benannte Anfrage vom benannten Endgerät, den benannten Gateway hindurch zum benannten Server stets mit WTLS gesichert weitergeleitet wird,
- wobei das benannte Gateway die benannte Anfrage zu einem Proxy weiterleitet,
- wobei der benannte Proxy mindestens eine Protokollschicht des WAP-Protokolls verwendet,
- wobei die benannte WTLS-gesicherte Anfrage in Abhängigkeit vom URI und/oder vom Domainname der angefragten Seite im benannten Gateway weitergeleitet wird, worauf die auf das oder die ersten Pakete folgenden Pakete während einer Session transparent weitergeleitet werden können.

Die Ziele werden auch durch ein WAP-Gateway mit den Merkmalen gemäss dem unabhängigen Vorrichtungsanspruch 17 erreicht.

Die Pakete werden durch eine sogenannte Tunnelschicht durch das Gateway übertragen, ohne dass sie entschlüsselt werden. Dadurch bleibt der Inhalt selbst dem Betreiber des Gateways unbekannt. Die Pakete werden dann erst beim Server des Dienstanbieters in einem Proxy (sogenannten E2ES-Proxy) entschlüsselt und mit dem Zertifikat einer vertrauten Drittinstanz verifiziert.

Ausserdem werden diese Ziele durch ein Verfahren erreicht, mit welchem ein Mobilteilnehmer mit einem WAP-tauglichen Endgerät auf einen WAP oder WEB-Server zugreifen kann, wobei das benannte Endgerät eine Anfrage für den benannten Server an ein WAP-Gateway sendet, in welchem ein Browser im benannten Endgerät die Portnummer der beantragten WEB- oder WAP-Seite extrahiert und in die zum benannten Gateway gesendeten Pakete kopiert, und in welchem die benannten Pakete im benannten Gateway in Abhängigkeit von dieser Portnummer weitergeleitet werden.

Ausserdem werden diese Ziele dadurch erreicht, dass die Anfrage, die von einem Endgerät über ein Gateway an einen WEB oder WAP-Server gesendet wird, mit WTLS End-zu-End gesichert wird.

Vorzugsweise kann im Gateway zwischen Sessionen, die konventionell behandelt werden sollen und Sessionen, die gemäss der vorliegenden Erfindung weitergeleitet werden sollen, unterschieden werden.

### Kurze Beschreibung der Figuren

Im Folgenden werden anhand der beigefügten Zeichnungen bevorzugte Ausführungsbeispiele der Erfindung näher beschrieben:
Die Figur 1 vergleicht die Protokollschichten in einem WAP-Protokoll-Stapel und im Internet Protokoll-Stapel.
Die Figur 2 zeigt das Prinzip einer gesicherten Datenübertragung gemäss dem aus dem Stand der Technik bekannten WAP-Protokoll.
Die Figur 3 zeigt das Prinzip einer gesicherten Datenübertragung gemäss einer ersten Variante der Erfindung.
Die Figur 4 zeigt das Prinzip einer gesicherten Datenübertragung gemäss einer zweiten Variante der Erfindung.
Die Figur 5 zeigt das Prinzip einer gesicherten Datenübertragung gemäss einer dritten Variante der Erfindung.

### Wege zur Ausführung der Erfindung

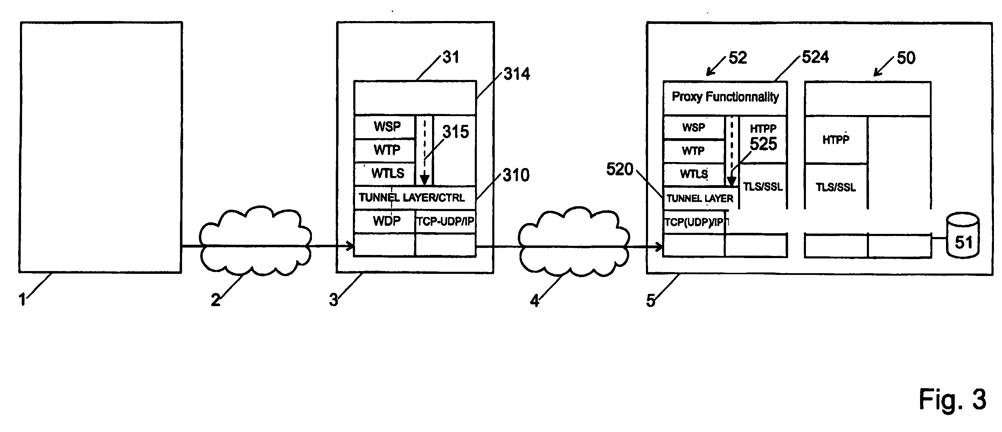

Die Figur 3 zeigt das Prinzip einer ersten Variante der Erfindung. Diese Figur zeigt ein in einem digitalen Mobilfunknetz 2 angemeldetes WAP-taugliches Endgerät 1, beispielsweise ein WAP-taugliches GSM-Mobilfunktelefon oder einen WAP-tauglichen tragbaren Rechner. Mit diesem Endgerät 1 kann ein Programm, beispielsweise ein WAP-Browser, ausgeführt werden, das sich als Kunde mit einem WAP- und/ oder WEB-Server 5 verbinden kann und somit auf Daten in diesem Server 5 zugreifen kann.

Der WAP- oder WEB-Server 5 enthält WML und/oder HTML-Seiten, die beispielsweise von einem Dienstanbieter (beispielsweise einem Finanzinstitut und/oder einem Anbieter im Bereich e-commerce) angeboten werden. Es wird oft von Dienstanbietern und Endbenutzern gewünscht, dass die Session, die aufgebaut wird, wenn ein Benutzer auf mehrere Seiten zugreift, gesichert wird. Insbesondere ist es oft nötig, dass manche Daten, die in beiden Richtungen zwischen dem Endgerät 1 und dem Server 5 übertragen werden, End-zu-End gesichert werden und dass keine Drittpartei, nicht einmal der Mobilfunknetzbetreiber, diese Daten entschlüsseln kann. Ausserdem wird eine gegenseitige Authentisierung des Dienstanbieters und des Mobilbenutzers benötigt.

Der Benutzer des Endgeräts 1 kann eine gesicherte Seite erreichen, beispielsweise um eine Transaktion durchzuführen, indem er beispielsweise auf den entsprechenden URL einer gesicherten oder nicht gesicherten Seite klickt. Der vom Dienstanbieter sp 1 definierte URL der Seite kann beispielsweise http://www.sp1.com:50443 lauten, wobei http://www.sp1.com die URL-Adresse des Dienstanbieters sp1 und 50443 seine Portnummer ist. In WAP werden hingegen die fortlaufenden Portnummerbereiche 920x angewendet.

Erfindungsgemäss werden die URL in den WML und/oder HTML-Seiten der Dienstanbieter so verfasst, dass die gewünschte Sessionsart (End-zu-End gesichert, Standard gesichert oder ungesichert) aus diesem URL, unter anderem aus der URL-Adresse und/oder aus der Portnummer, ermittelt werden kann.

Mit dem Bezugszeichen 3 ist ein ebenfalls dem Mobilfunknetz 2 angeschlossenes Gateway dargestellt. Das Gateway 3 nimmt die Pakete vom Endgerät 1 des Benutzers entgegen und entschlüsselt das oder die ersten Pakete in jeder Session, bis eine Anwendung 314 die Portnummer und die URL der gewünschten WEB- oder WAP-Seite aus den Paketen extrahieren kann.

Sobald diese Angaben gefunden worden sind, bestimmt die Anwendung 314 anhand den vom Verwalter des Gateways 3 angegebenen Angaben, wie die Pakete bearbeitet werden sollen. Insbesondere bestimmt die Anwendung, ob die Session zwischen dem Endgerät 1 und dem Server 5 End-zu-End gesichert werden soll. Dies ist beispielsweise dann der Fall, wenn sich die Portnummer (beispielsweise 50443) in einer vom Administrator des Gateways 3 aufgebauten Liste befindet.

Das Gateway 3 verwendet eine zusätzliche Protokoll- oder Tunnelschicht 310, die von der Anwendung 314 gesteuert wird (Pfeil 315). Wenn die Session gesichert werden soll, wird die Tunnelschicht 310 so gesteuert, dass alle nachfolgenden Pakete der Session in transparenter Art durch das Gateway 3 geführt und an die Zieladresse des Servers 5 weitergeleitet werden, ohne konvertiert und vor allem ohne entschlüsselt zu werden.

Die immer noch mit WTLS gesicherten Pakete der Session werden dann über das Netz 4 weitergeleitet und vom Server 5 im gesicherten Gebiet des Dienstanbieters entgegengenommen. Das Netz 4 kann beispielsweise aus dem Internet oder aus einer gemieteten Telefon-Linie bestehen. Der Server 5 umfasst einen Proxy 52, welcher später erläutert wird, ein konventionelles Gateway 50, und eine Datenbank 51, in welcher ein WEB- und/oder WAP-Inhalt abgelegt ist.

Der Proxy 52 im Server 5 des Dienstanbieters wird so aufgebaut, dass es WTLS-gesicherte Sessionen entgegennehmen kann. Es umfasst vorzugsweise einen kompletten WAP-Protokoll-Stapel und kann somit durch vom Fachmann leicht durchführbare Anpassungen von standardisierter Software realisiert werden. In diesem Proxy 52 werden empfangene mit WTLS gesicherte WDP-Datagramme mit dem Zertifikat einer vertrauten Drittinstanz geprüft, entschlüsselt und in normale TCP-IP-Datagramme übersetzt, wobei die HTTP-Session optional mit SSL gesichert werden kann. Die TCP-IP konvertierten Pakete werden an den WAP- oder WEB-Server bzw. das Gateway 50 weitergeleitet, das eventuell eine andere Protokollkonvertierung durchführt, damit die empfangene Abfrage von der oder einem System von Datenbanken 51 bearbeitet werden kann.

Als Alternative können die Datagramme mit einem Session-Schlüssel ver- und entschlüsselt werden, dessen Schlüssel mit Hilfe eines zertifizierten, öffentlichen Schlüssel während der Schlüsselvereinbarungsphase generiert werden.

Die Antwort vom WEB- bzw. WAP-Server bzw. vom Gateway 50, zum Beispiel die gewünschte WEB- oder WAP-Seite, wird vom Gateway 50 in die andere Richtung gesendet, im Proxy 52 übersetzt und mit WTLS-Diensten gesichert und durch die "Tunnelschicht" 310 im Gateway 31 an das Endgerät 1 des Benutzers geleitet, wobei die gesamte Verbindung zwischen Server 5 und Endbenutzer 1 mit WTLS gesichert wird.

Datagramme, die aufgrund des enthaltenen URL und/oder der Portnummer keine End-zu-End gesicherte Datenübertragung verlangen, werden im Gateway 31 gemäss der konventionellen vom WAP-Forum empfohlenen Lösung durch alle Schichten des Protokolls im Gateway 3 entschlüsselt, mit TLS/SSL wieder gesichert und an die in den Paketen angegebene URL-Adresse weitergeleitet. Beispielsweise werden Sessionen mit der Portnummer 80 wie gewöhnliche HTTP-Sessionen behandelt und weitergeleitet.

Antworten vom Server 5 (beispielsweise die gewünschten WEB-oder WAP-Seiten), die keine WTLS-Sicherung zwischen Server 5 und Gateway 3 verlangen, werden von der Proxy-Anwendung 524 durch eine Tunnelschicht 520 im Proxy 52 durchgeführt (Pfeil 525) und erst im Gateway 3 mit WTLS-Diensten gesichert.

Diese Variante verlangt keine Änderungen vom Browser im Endgerät 1 und nur ein relativ einfacher Proxy 53 beim Dienstanbieter 5, das WTLS-Sessionen entgegennehmen kann. Die Software-Implementation des Gateways 3 kann sich jedoch als schwierig erweisen.

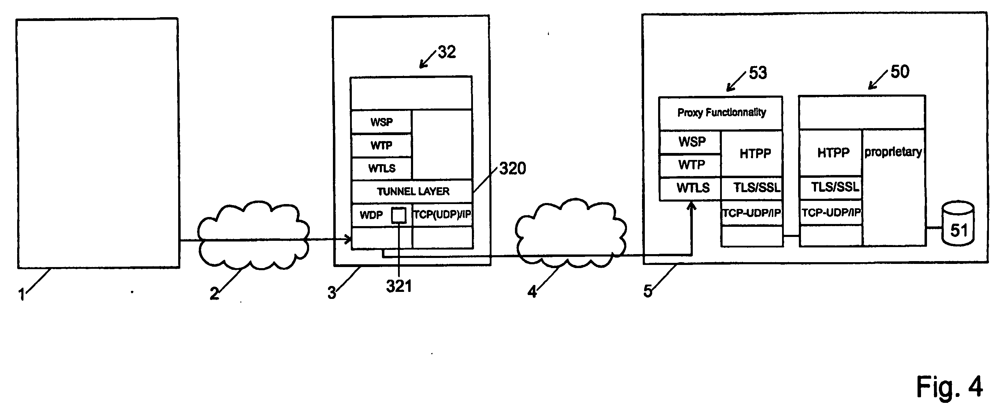

Die zweite Variante, die auf der Figur 4 dargestellt wird, erlaubt es, dieses Problem durch eine leicht durchführbare Anpassung der Anwendung (zum Beispiel des Browsers) im Endgerät 1 zu vermeiden. In dieser Variante wird die URL-Adresse und die Portnummer der verlangten WEB-oder WAP-Seite vom Browser in jedes Paket (WDP-Datagramm) der Session kopiert. Diese Pakete werden dann über das Mobilfunknetz 2 an das Gateway 3 gesendet, wo die Portnummer und die URL analysiert werden, um zu ermitteln wie die Pakete weiterbehandelt werden sollen.

Diese Variante hat den Vorteil, dass die Analyse und die Weiterbehandlung der Pakete in den unteren Schichten des Protokolls, unter anderem in der WDP und/oder WTLS-Schicht, durchgeführt werden kann und dass sie somit nur minimale Anpassungen des Gateways 3 verlangt.

Eine Tabelle 321 im Gateway 32 oder in einem nicht dargestellten Router vor dem Gateway 32 gibt an, wie die Pakete je nach Portnummer und URL behandelt werden sollen und insbesondere welche Pakete transparent durch die Tunnelschicht 320 gehen sollen. Diese Tabelle 321 kann vorzugsweise vom Administrator des Gateways 32 konfiguriert und geändert werden, ohne dass das Gateway 32 neu gestartet werden muss, damit die Konfiguration während des Betriebes aktualisiert werden kann. Daten in der Tabelle 321 können vorzugsweise nur vom Administrator geändert werden, oder von Personen mit Administratorenrechten.

Die Tabelle 321 im Gateway 32 könnte beispielsweise folgende Zeilen enthalten:

| | Eingegebene URL Adresse | | Neue Adresse (vom Gateway erteilt) | | Bemerkung |
|---|---|---|---|---|---|
| | Adresse | Portnummer | Adresse | Portnummer | |
| 1 | 138.10.20.30 | 8040 | 140.50.60.70 | 12345 | Pakete mit dieser Adresse werden auf transparente Weise an die neue Adresse geleitet. Die Portnummer wird ersetzt (Mapping). |
| 2 | *.*.*.* | 50443 | *.*.*.* | 50443 | Stern-Joker erlauben eine Bedingung für alle Server mit der gleichen Portnummer zu setzen |
| 3 | 138.10.20.40 | * | 138.10.20.40 | * | Wie oben, jedoch ohne DNS-Lookup |
| 4 | www.sp1.com | * | www.sp1.com | * | Alle URL vom sp1 müssen durch die Tunnelschicht |
| 5 | www.sp1.com | 80 | www.sp1.com | 80 | Alle Verbindungen mit Portnummer 80 durch die Tunnelschicht |
| 6 | www.sp1.ch | 50443 | www.sp1.ch | 50443 | sp1 verlangt, dass alle Sessionen mit der Portnummer 50443 durch die Tunnelschicht geleitet werden. |
| 7 | www.sp2.ch | 443 | www.sp2.ch | 443 | sp2 verlangt, dass alle Sessionen mit der Portnummer 443 durch die Tunnelschicht geleitet werden. Damit wird kein SSL mit dem Port 443 verwendet. SSL kann dann beispielsweise vom Proxy verwendet werden. |
| 8 | ... | | | | |

Der Administrator des Gateways 32 wird vorzugsweise den Dienstanbietern einen Bereich von URL-Adressen und/oder Portnummern zur Verfügung stellen. Dienstanbieter sp1, sp2, usw. können dann eine oder mehrere URL, oder Portnummern, oder Kombinationen aus beiden, für sich reservieren und den Administrator des Gateways 32 anweisen, Pakete mit dieser URL und/oder Portnummer transparent weiterzuleiten.

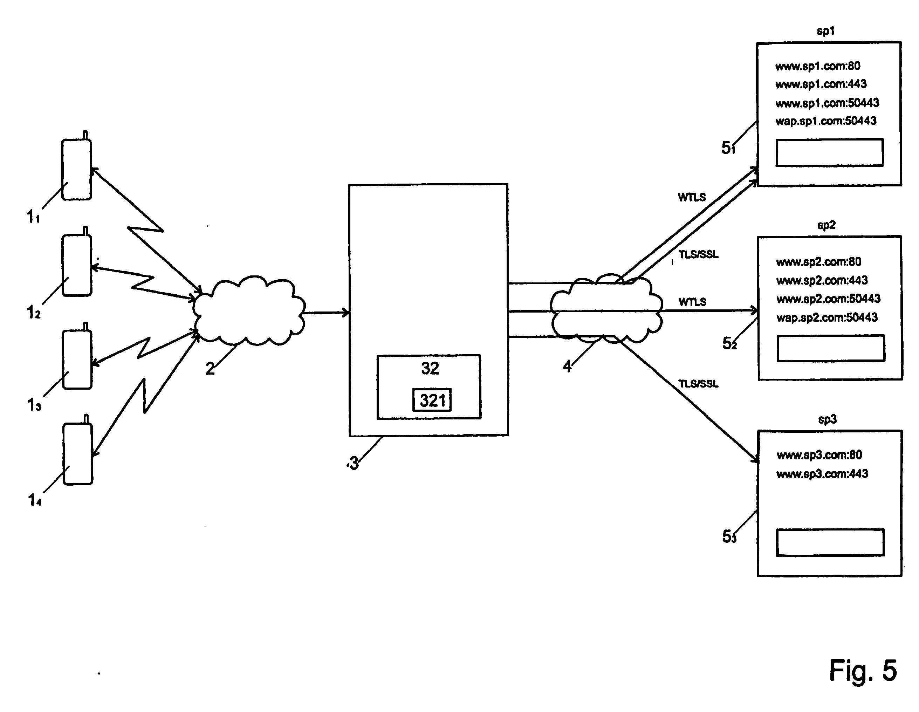

Die Figur 5 zeigt als Beispiel, wie die Pakete, die von verschiedenen Endgeräten 1₁ bis 1₄ gesendet werden, vom Gateway 3 in Abhängigkeit ihrer URL-Adresse und/oder Portnummer behandelt werden.

Das dargestellte System umfasst in diesem Beispiel drei Server 5₁, 5₂ und 5₃ von drei verschiedenen Dienstanbietern sp1, sp2 und sp3. Die vier folgenden Seiten werden im ersten Server 5₁ (bzw. 5₂) abgelegt:
■ eine ungesicherte WEB-Seite mit der Adresse www.sp1.com:80 (bzw. www.sp2.com:80)
■ eine WEB-Seite mit der Adresse www.sp1.com:443 (bzw. www.sp2.com:443), die nur mit SSL gesichert wird (keine End-zu-End-Sicherheit)
■ eine WEB-Seite mit der Adresse www.sp1.com:50443 (bzw. www.sp2.com:50443), die mit WTLS gesichert wird (End-zu-End-Sicherheit)
■ eine WAP-Seite mit der Adresse wap.sp1.com:50443 (bzw. wap.sp2.com:50443), die mit WTLS gesichert wird (End-zu-End-Sicherheit)

Im Server 5₃ des dritten Dienstanbieters sp3 werden nur zwei Seiten abgelegt:
■ eine ungesicherte WEB-Seite mit der Adresse www.sp3.com:80
■ eine WEB-Seite mit der Adresse www.sp3.com:443, die nur mit SSL gesichert wird (keine End-zu-End-Sicherheit)

Der Benutzer des ersten Endgeräts 1₁ will auf die gesicherten Seiten www.sp1.com:443 und www.sp1.com:50443 des Dienstanbieters SP1 im Server 5₁ zugreifen, indem er GET(URL) Abfragen mit entsprechenden URL an das Gateway 3 sendet. Das Gateway 3 erkennt anhand der Tabelle 321 und des im Datagramm enthaltenen URL und/oder der Portnummer, welche Sicherheiten von diesen Seiten verlangt werden. Im ersten Fall (SSL Sicherheit) werden alle Datagramme der Session im Gateway 3 entschlüsselt und eine Übersetzung von WTLS zu SSL wird durchgeführt. Im zweiten Fall (End-zu-End-Sicherheit mit WTLS) werden alle Datagramme der Session transparent an den Server 5₁ weitergeleitet, ohne dass sie entschlüsselt werden.

Der Benutzer des zweiten Endgeräts 1₂ will auf die Seite www.sp2.com:50433 des Dienstanbieters sp2 im Server 5₂ zugreifen, die eine End-zu-End-Sicherheit verlangt. Datagramme mit dieser Adresse werden im Gateway 3 erkannt und transparent durch die Tunnelschicht an den Server 5₂ geleitet.

Der Benutzer des dritten Endgeräts 1₃ will auf die Seite www.sp3.com:443 des Dienstanbieters sp2 im Server 5₂ zugreifen, die eine mit TLS/SSL gewährleistete Sicherheit verlangt. WTLS-gesicherte Datagramme mit dieser Adresse werden im Gateway 3 erkannt, durch alle Schichten des Protokoll-Stapels übersetzt, mit TLS/SSL gesichert und an den Server 5₃ weitergeleitet.

Der Benutzer des vierten Endgeräts 1₄ will auf die ungesicherte Seite www.sp3.com:80 des Dienstanbieters sp2 im Server 5₂ zugreifen. WTLS-gesicherte Pakete mit dieser Adresse werden im Gateway 3 erkannt, durch alle Schichten des Protokoll-Stapels übersetzt und an den Server 5₃ weitergeleitet, ohne sie durch das Netz 4 zu sichern.

Diese Variante verlangt nur minimale Änderungen vom Gateway 3. Allerdings müssen die Browser-Anwendungen in den Endgeräten 1 leicht angepasst werden, was sich bei vielen Anbietern als schwierig erweisen kann.

Wir werden jetzt eine dritte Erfindungsvariante beschreiben, die diesen Nachteil vermeidet.

In dieser Variante werden Sessionen, die eine End-zu-End-Sicherheit verlangen, anhand der URL-Adresse und/oder der Portnummer wie in der ersten oder zweiten Variante erkannt. Statt die Sessionen durch die Tunnelschicht 320 transparent weiterzuleiten, sendet das Gateway 3 in diesem Fall einen standardisierten Redirect-Befehl mit der in der Tabelle 321 angegebenen Adresse und Portnummer des Dienstanbieters und mit anderen Parametern für die Identifizierung vom Gateway 5, wie Dial-In Nummer, an das Endgerät 1.

Die Weiterleitungsadresse (Adresse, Portnummer, Dial-In Nummer, usw..) im Redirect-Befehl wird vorzugsweise aus einem vom WAP- oder WEB-Server 5 zugänglich gemachten Dokument extrahiert. Der Redirect-Befehl kann auch dieses oder ein anderes Dokument oder die Adresse eines solchen Dokuments enthalten, in welchem die Weiterleitungsadresse enthalten ist. Im Dokument können vorzugsweise verschiedene Adressengebiete mit Stringmuster, beispielsweise mit *, angegeben werden.

Die Anwendung im Mobil- bzw. Endgerät 1, die diesen Redirect Befehl entgegennimmt, reagiert, indem sie jetzt die schon vorher an das Gateway 3 gesendeten Pakete wieder direkt an die im Redirect-Befehl angegebene Adresse des Dienstanbieters sendet.

Alle Pakete in der Session werden dann direkt zwischen dem Endgerät 1 und dem Server 5 übertragen, bis der Endbenutzer einen anderen URL sendet, der vom Server 5 nicht bearbeitet werden kann (beispielsweise wenn sich die entsprechende gewünschte Seite nicht auf diesem Server 5 befindet). In diesem Fall wird die Session vom Server 5 unterbrochen und die nachfolgenden Pakete werden wieder an das Gateway 3 gesendet.

Falls keine End-zu-End-Sicherheit benötigt wird, wird kein Redirect Befehl vom Gateway 3 gesendet. In diesem Fall werden alle Pakete während der gesicherten Session durch das Gateway 3 gesendet.

### Bezugszeichenliste

- 1: Endgerät
- 1₁, 1₂, 1₃, 1₄: Endgerät
- 2: Mobilfunknetz
- 3: Gateway im Mobilfunknetz 2
- 30: Konvertierungsmodul
- 31: Gateway
- 310: Tunnelschicht
- 314: Anwendung
- 315: Pfeil
- 32: Gateway
- 320: Tunnelschicht
- 321: Tabelle
- 4: Netz
- 5: Server
- 5₁,5₂,5₃: Server
- 50: Gateway
- 51: Datenbank
- 52: Proxy, Proxyserver
- 520: Tunnelschicht
- 524: Proxy-Anwendung
- 525: Pfeil
- 53: Proxy
- sp1, sp2, sp3: Dienstanbieter

## Patentansprüche

1. Verfahren, mit welchem ein Mobilteilnehmer mit einem WAP-tauglichen Endgerät (1) auf einen WAP- oder WEB-Server (5) zugreifen kann,
wobei das benannte Endgerät (1) eine Anfrage für den benannten Server (5) an ein WAP-Gateway (3) sendet,
wobei die benannte Anfrage vom benannten Endgerät (1) anhand des Sicherheitsprotokolls WTLS (Wireless Transport Layer Security) gesendet wird,
wobei der benannte Server (5) mit dem SSL und/oder TLS Sicherheitsprotokoll gesichert ist,
**dadurch gekennzeichnet, dass** eine Protokollübersetzung zwischen WTLS und SSL und/oder TLS im benannten Server (5) erfolgt,
und dass keine vollständige WAP-Entschlüsselung im benannten Gateway (3) erfolgt,
und dass die benannte Anfrage vom benannten Endgerät (1), den benannten Gateway (3) hindurch zum benannten Server (5) stets mit WTLS gesichert weitergeleitet wird,
wobei das benannte Gateway (3) die benannte Anfrage zu einem Proxy (52) weiterleitet,
wobei der benannte Proxy (52) mindestens eine Protokollschicht des WAP-Protokolls verwendet,
wobei die benannte WTLS-gesicherte Anfrage in Abhängigkeit vom URI und/oder vom Domainname (URL) der angefragten Seite im benannten Gateway (3) weitergeleitet wird, worauf die auf das oder die ersten Pakete folgenden Pakete während einer Session transparent weitergeleitet werden können.

2. Verfahren gemäss einem der vorhergehenden Ansprüche, in welchem die benannte Anfrage abhängig von einer Portnummer im benannten Gateway (3) weitergeleitet wird.

3. Verfahren gemäss dem vorhergehenden Anspruch, in welchem die benannte Anfrage abhängig von verschiedenen Portnummern an verschiedene gesicherte Gebiete weitergeleitet wird.

4. Verfahren gemäss einem der Ansprüche 2 oder 3, in welchem die benannte Portnummer aus der URI und/oder URL der angefragten Seite in einer Anwendungsschicht des benannten Gateways (3) extrahiert werden.

5. Verfahren gemäss Anspruch 4, in welchem die benannte Portnummer während einer Session nur aus einer begrenzten Anzahl von Paketen extrahiert wird,
und in welchem das Weiterleiten von mindestens einem folgenden Paket von dieser benannten extrahierten Portnummer abhängig ist.

6. Verfahren gemäss Anspruch 5, in welchem ein Proxyserver (52) im benannten gesicherten Gebiet die URI und/oder die Portnummer der empfangenen Pakete extrahiert, und in welchem der benannte Proxyserver (52) dem benannten Gateway (3) einen Befehl zurücksendet, wenn er ein Paket mit einer anderen URI und/oder mit einer anderen Portnummer empfängt.

7. Verfahren gemäss einem der Ansprüche 2 oder 3, in welchem die benannte Portnummer aus dem benannten URI und/oder URL der angefragten Webseite im benannten Endgerät (1) extrahiert wird.

8. Verfahren gemäss Anspruch 7, in welchem die benannte Portnummer von einem Browser aus dem URI und/oder URL der angefragten Webseite extrahiert wird.

9. Verfahren gemäss einem der Ansprüche 6 oder 7, in welchem der Browser im benannten Endgerät (1) die benannte Portnummer in den benannten Paketen erst dann kopiert, wenn eine End-zu-End gesicherte Verbindung beantragt ist.

10. Verfahren gemäss einem der Ansprüche 2 bis 9, in welchem die benannten Pakete im benannten Gateway (3) an ein gesichertes Gebiet weitergeleitet werden wenn sich die benannte Portnummer in einem bestimmten Bereich befindet.

11. Verfahren gemäss Anspruch 1, **dadurch gekennzeichnet, dass** wenn eine End-zu-End gesicherte Verbindung beantragt ist, das benannte Gateway (3) einen Redirect-Befehl zum benannten Endgerät (1) sendet.

12. Verfahren gemäss dem vorhergehenden Anspruch, in welchem der benannte Redirect Befehl zeitlich begrenzt ist.

13. Verfahren gemäss Anspruch 11, in welchem ein Proxyserver (52) im benannten gesicherten Gebiet die URI und/oder eine Portnummer der empfangenen Pakete extrahiert, und einen Redirect Befehl zurück zum benannten Endgerät (1) sendet, sobald die Session zum benannten Gateway (3) weitergeleitet werden soll.

14. Verfahren gemäss Anspruch 11, in welchem der benannte Redirect-Befehl eine Weiterleitungsadresse enthält, die aus einem vom benannten WAP- oder WEB-Server (5) zugänglich gemachten Dokument extrahiert wird.

15. Verfahren gemäss dem Anspruch 11, in welchem der benannte Redirect-Befehl ein Dokument enthält, in welchem die Weiterleitungsadresse enthalten ist.

16. Verfahren gemäss dem Anspruch 1, in welchem ein Browser im benannten Endgerät (1) eine Portnummer der beantragten WEB- oder WAP-Seite aus der Anfrage extrahiert und in zum benannten Gateway (3) gesendete Pakete kopiert,
und dass die benannten Pakete im benannten Gateway (3) in Abhängigkeit von dieser Portnummer weitergeleitet werden.

17. WAP-Gateway (3) zur Weiterleitung einer Anfrage eines WAP-tauglichen Endgeräts auf einen WAP- oder WEB-Server (5) gemäss Anspruch 1, das derart ausgestaltet ist, dass es mit WTLS-gesicherte Pakete von WAP-tauglichen Endgeräten (1) entgegennehmen und in SSLgesicherte-Anfragen übersetzen kann,
**gekennzeichnet durch** Mittel (321) zur Erkennung von auf das oder die ersten Pakete nachfolgenden Pakete, die in transparenter Weise weitergeleitet werden sollen, wobei diese Mittel (321) derart ausgestaltet sind, dass sie Pakete erkennen, ohne alle Pakete zu entschlüsseln, die während einer Session übertragen werden,
und **durch** Mittel zur Weiterleitung von diesen erkannten Paketen ohne die erkannten Paketen vollständig zu entschlüsseln, wobei die benannten Pakete, die in transparenter Weise weitergeleitet werden sollen, in Abhängigkeit vom URI und/oder vom Domainnamen (URL) der angefragten Seite erkannt werden.

18. Gateway gemäss Anspruch 17, in welchem die benannten Pakete, die in transparenter Weise weitergeleitet werden sollen, in Abhängigkeit von einer Portnummer erkannt werden.

19. Gateway gemäss dem vorhergehenden Anspruch, in welchem die benannten Pakete abhängig von verschiedenen Portnummern an verschiedene gesicherte Gebiete weitergeleitet werden.

20. Gateway gemäss einem der Ansprüche 18 oder 19, in welchem die benannte Portnummer aus dem URI und/oder URL der angefragten Seite in einer Anwendungsschicht des benannten Gateways (3) extrahiert werden.

21. Gateway gemäss Anspruch 18, in welchem die benannte Portnummer während einer Session nur aus einer begrenzten Anzahl von Paketen extrahiert wird,
und in welchem das Weiterleiten von mindestens einem folgenden Paket von dieser benannten extrahierten Portnummer abhängig ist.

## Claims

1. Method with which a mobile subscriber with a WAP-enabled terminal (1) can access a WEB or WAP server (5),
wherein said terminal (1) sends a request for said server (5) to a WAP gateway (3),
wherein said request from said terminal (1) is sent on the basis of the security protocol WTLS (Wireless Transport Layer Security),
wherein said server (5) is secured with the SSL and/or TLS security protocol,
**characterized in that** the protocol conversion between WTLS and SSL and/or TLS occurs in said server (5)
and **in that** no complete WAP decryption occurs in said gateway (3),
and **in that** said request from said terminal (1) is routed, always secured with WTLS, through said gateway (3) to said server (5),
wherein said gateway (3) routs said request to a proxy (52),
wherein said proxy (52) uses at least one protocol layer of the WAP protocol,
wherein said WTLS-secured request is routed in said gateway (3) depending on the URI and/or on the domain name (URL) of the requested page, it being possible to rout the packets following the first packet or packets transparently during a session.

2. Method according to one of the preceding claims, wherein said request is routed according to a port number in said gateway (3).

3. Method according to the preceding claim, wherein said request is routed according to different port numbers to different secured domains.

4. Method according to one of the claims 2 or 3, wherein said port numbers are extracted in an application layer of said gateway (3) from the URI and/or URL of the requested page.

5. Method according to claim 4, wherein said port number is extracted only from a restricted number of packets during a session,
and wherein the routing of at least one of the following packets depends on this said extracted port number.

6. Method according to claim 5, wherein a proxy server (52) in said secured domain extracts the URI and/or the port number of the received packets and wherein said proxy server (52) sends back a command to said gateway (3) if it receives a packet with a different URI and/or port number.

7. Method according to one of the claims 2 or 3, wherein said port number is extracted from said URI and/or URL of the required web page in said terminal (1).

8. Method according to claim 7, wherein said port number is extracted by a browser from said URI and/or URL of the required web page.

9. Method according to one of the claims 6 or 7, wherein the browser in said terminal (1) copies said port number in said packets only if an end-to-end secured connection is requested.

10. Method according to one of the claims 2 to 9, wherein said packets in said gateway (3) are routed to a secured domain if said port number is comprised in a predefined range.

11. Method according to claim 1, **characterized in that** said gateway (3) sends a redirect command to said terminal (1) if an end-to-end secured connection is requested.

12. Method according to the preceding claim, wherein said redirect command is time-limited.

13. Method according to claim 11, wherein a proxy server (52) in said secured domain extracts the URI and/or the port number of the received packets and sends a redirect command back to said terminal (1) as soon as the session is to be routed to said gateway (3).

14. Method according to claim 11, wherein said redirect command contains a forwarding address which is extracted from a document made accessible by said WEB or WAP server (5).

15. Method according to claim 11, wherein said redirect command contains a document which includes the forwarding address.

16. Method according to claim 1, wherein a browser in said terminal (1) extracts the port number of the demanded WEB or WAP page from the request and copies it to packets sent to said gateway (3),
and wherein said packets are routed in said gateway (3) according to this port number.

17. WAP-Gateway (3) for routing a request from a WAP-enabled device to a WAP- or WEB-server (5) according to claim 1, designed in such a fashion that it can receive WTLS-secured packets from WAP-enabled terminals (1) and translate them into SSL-secured requests,
**characterized by** means (321) for recognizing the packet or packets following the first packets and which are to be routed transparently, wherein these means (321) are designed in such a fashion that they recognize packets without decrypting all packets that are transmitted during a session,
and by means for routing these recognized packets without completely decrypting said recognized packets, wherein said packets that are to be routed transparently are recognized depending on the URI and/or on the domain name (URL) of the requested page.

18. Gateway according to claim 17, wherein said packets, which are to be routed transparently, are recognized depending on their port number.

19. Gateway according to the preceding claim, wherein said packets are routed to different secured domains according to different port numbers.

20. Gateway according to one of the claims 18 or 19, wherein said port number is extracted from the URI and/or URL of the requested page in an application layer of said gateway (3).

21. Gateway according to claim 18, wherein said port number is extracted during a session only from a restricted number of packets,
and wherein the routing of at least one following packet depends on said extracted port number.

## Revendications

1. Procédé, avec lequel un abonné mobile avec un terminal (1) apte au WAP peut accéder à un serveur WAP ou WEP (5),
ledit terminal (1) émettant une demande pour ledit serveur (5) à une passerelle WAP (3),
ladite demande dudit terminal (1) étant émise au moyen du protocole de sécurité WTLS (Wireless Transport Layer Security),
ledit serveur (5) étant sécurisé avec le protocole de sécurité SSL et/ou TLS,
**caractérisé en ce qu'**une traduction de protocole entre WTLS et SSL et/ou TLS a lieu dans ledit serveur (5),
et **en ce qu'**aucun décryptage WAP complet n'a lieu dans ladite passerelle (3),
et **en ce que** ladite demande dudit terminal (1) est retransmise au travers de ladite passerelle (3) vers ledit serveur (5) continuellement sécurisée avec WTLS,
ladite passerelle (3) retransmettant ladite demande à un mandataire (52),
ledit mandataire (52) utilisant au moins une couche protocole du protocole WAP,
ladite demande sécurisée par WTLS étant retransmise dans ladite passerelle (3) en fonction du URI et/ou du nom de domaine (URL) de la page demandée, les paquets suivant le ou les premiers paquets pouvant être retransmis de manière transparente durant une session.

2. Procédé selon l'une des revendications précédentes, dans lequel ladite demande est retransmise dans ladite passerelle (3) en fonction d'un numéro de port.

3. Procédé selon la revendication précédente, dans lequel ladite demande est retransmise à différentes zones sécurisées en fonction de différents numéros de port.

4. Procédé selon l'une des revendications 2 ou 3, dans lequel ledit numéro de port est extrait de l'URI et/ou URL de la page demandée dans une couche application de ladite passerelle (3).

5. Procédé selon la revendication 4, dans lequel ledit numéro de port est extrait durant une session uniquement d'un nombre limité de paquets,
et dans lequel la retransmission d'au moins un paquet suivant dépend de ce dit numéro de port extrait.

6. Procédé selon la revendication 5, dans lequel un serveur mandataire (52) dans ladite zone sécurisée extrait l'URI et/ou le numéro de port des paquets reçus, et dans lequel ledit serveur mandataire (52) renvoie un ordre à ladite passerelle (3), lorsqu'il reçoit un paquet avec un autre URI et/ou avec un autre numéro de port.

7. Procédé selon l'une des revendications 2 ou 3, dans lequel ledit numéro de port est extrait dudit URI et/ou URL de la page Web demandée dans ledit terminal (1).

8. Procédé selon la revendication 7, dans lequel ledit numéro de port est extrait par un navigateur de l'URI et/ou URL de la page Web demandée.

9. Procédé selon l'une des revendications 6 ou 7, dans lequel le navigateur dans ledit terminal (1) ne copie ledit numéro de port dans lesdits paquets que lorsque une connexion sécurisée de bout en bout est demandée.

10. Procédé selon l'une des revendications 2 à 9, dans lequel lesdits paquets sont retransmis dans ladite passerelle (3) à une zone sécurisé lorsque ledit numéro de port se trouve dans un domaine déterminé.

11. Procédé selon la revendication 1, **caractérisé en ce que**, lorsqu'une connexion sécurisée de bout en bout est demandée, ladite passerelle (3) émet un ordre de redirection audit terminal (1).

12. Procédé selon la revendication précédente, dans lequel ledit ordre de redirection est limité dans le temps.

13. Procédé selon la revendication 11, dans lequel un serveur mandataire (52) dans ladite zone sécurisée extrait l'URI et/ou un numéro de port des paquets reçus et renvoie un ordre de redirection audit terminal (1) aussitôt que la session vers ladite passerelle (3) doit être retransmise.

14. Procédé selon la revendication 11, dans lequel ledit ordre de redirection contient une adresse de retransmission qui est extraite d'un document rendu accessible par ledit serveur WAP ou WEB (5).

15. Procédé selon la revendication 11, dans lequel ledit ordre de redirection contient un document dans lequel l'adresse de retransmission est contenue.

16. Procédé selon la revendication 1, dans lequel un navigateur dans ledit terminal (1) extrait de la demande un numéro de port de la page WEB ou WAP demandée et le copie dans des paquets envoyés à ladite passerelle (3),
et en ce que lesdits paquets sont retransmis dans ladite passerelle (3) en fonction de ce numéro de port.

17. Passerelle WAP (3) pour la retransmission d'une demande d'un terminal apte au WAP sur un serveur WAP ou WEB (5) selon la revendication 1, qui est constitué de telle manière qu'il peut recevoir des paquets sécurisés avec WTLS de terminaux (1) aptes au WAP et les traduire en demandes sécurisées par SSL,
**caractérisé par** des moyens (321) pour la reconnaissance de paquets suivant le ou les premiers paquets et qui doivent être retransmis de manière transparente, ces moyens (321) étant constitués de telle manière qu'ils reconnaissent des paquets sans décrypter tous les paquets qui sont transmis durant une session,
et par des moyens pour la retransmission de ces paquets reconnus sans décrypter complètement les paquets reconnus, lesdits paquets qui doivent être retransmis de manière transparente étant reconnus en fonction de l'URI et/ou du nom de domaine (URL)de la page demandée.

18. Passerelle selon la revendication 17, dans laquelle lesdits paquets qui doivent être retransmis de manière transparente sont reconnus en fonction d'un numéro de port.

19. Passerelle selon la revendication précédente, dans laquelle lesdits paquets sont retransmis à différentes zones sécurisées en fonction de différents numéros de port.

20. Passerelle selon l'une des revendications 18 ou 19, dans laquelle ledit numéro de port est extrait de l'URI et/ou URL de la page demandée dans une couche application de ladite passerelle (3).

21. Passerelle selon la revendication 18, dans laquelle ledit numéro de port est extrait durant une session uniquement d'un nombre limité de paquets,
et dans laquelle la retransmission d'au moins un paquet suivant dépend de ce dit numéro de port extrait.
